# EUROPEAN PATENT APPLICATION

(11) **EP 0 917 061 A1**
(43) Date of publication of application: **19.05.1999**
(21) Application number: 97650052.0
(22) Date of filing: 11.11.1997
(51) Int. Cl.: G06F 11/22

(54) **A data processing support method and system**

(71) Applicant: Corita Consultancy Limited, Foxrock, Dublin 18 (IE)
(72) Inventor: Hayes, Leonard, Leopardstown, Dublin 18 (IE)
(74) Representative: Weldon, Michael James

(57) **Abstract**

A centralised support system (1) supports remote application servers (40). A central server (10) receives all event signals, either directly from an application server (40) or via a workstation (12). An event record is generated and is automatically routed to a workstation (12), which handles the event. When complete, the workstation (12) directs closure of the event record. The central server (10) automatically updates a diagnostic database (26).

## Description

The invention relates to the technical support of data processing systems in a number of different locations from a central site. In this specification, the term "support" means the handling of data processing system events, which can include issues, requests, problems, hardware or software faults, subscriber queries, or sometimes general queries.

In order to provide support for a comprehensive range of different events, it is generally necessary to have a large degree of human expertise. This is of course extremely expensive and it is therefore very important to use a system which allows optimum use of this expertise both to provide a good comprehensive service, and to keep costs to a minimum.

European Patent Specification No. EP333620 (IBM) describes a central support system which has a database outputting instructions, hardware and software module lists, and service call schedules. There is automatic problem diagnosis so that the central support system operates essentially as a centralised expert system. While this system is undoubtedly of benefit in many environments, there is still a need for an improved support method and system which operates with:-
(a) a comprehensive range of support request sources and communication methods as present support systems tend to be event specific,
(b) increased flexibility at the support centre for utilisation of human expertise, and
(c) proactive and preventative support with anticipation of problems before they arise.

It is therefore an object of the invention to provide a data processing support method and apparatus to meet these requirements.

According to the invention, there is provided a support system for performing centralised support for data processing remote systems, the support system comprising an interface for communication with the remote systems and a processing means for processing received support requests, characterised in that,
the processing means comprises a central server connected to a plurality of workstations;
the central server comprises means for automatically creating an event record with event condition data upon receipt of an event signal from a remote system;
the central server comprises means for routing each event record to a workstation; and
each workstation comprises means for processing events according to received event records.

In one embodiment, the central server comprises means for maintaining a live database of event records, and for updating the database.

Preferably, each workstation comprises means for directing closure of an event record after it has processed the associated event.

In another embodiment, each workstation comprises means for receiving locally-inputted event condition data, and for transmitting corresponding event signals to the central server. Ideally, each workstation comprises means for indicating in event signals that a event has been dealt with, and the central server comprises means for writing an event record to the database for recording purposes.

Preferably, the central server comprises means for automatically routing event records to the workstations according to priority and resource codes.

In a further embodiment, the central server comprises means for retrieving the resource code from a look-up table addressed with event condition data.

Ideally, the workstations comprise means for dynamically updating the look-up table.

In a further embodiment, the central server comprises means for determining the priority code according to priority data embedded in the event signals.

In another embodiment, the workstations comprise means for accessing a diagnostic database for retrieval of diagnostic data.

Preferably, the central server comprises means for automatically updating the diagnostic database upon closure of an event record by transmitting textual problem and solution data, and the diagnostic database comprises means for automatically parsing said data. In one embodiment, the central server comprises means for automatically archiving closed records, and for generating management reports from the archived records.

According to another aspect, the invention provides a data processing system comprising means for processing data for detecting event conditions and for transmitting event signals to a support system, characterised in that, said processing means further comprises:-
means for automatically detecting event conditions in the system and for automatically writing event data to a mapped section of memory; and
means for periodically polling said mapped section of memory and for automatically transmitting event signals to the support system.

Preferably, the system comprises a plurality of software levels, each level comprising means for independently detecting event conditions.

In one embodiment, the system comprises application, transaction processing, database control, and operating system levels in descending order.

Preferably, the mapped section of memory and the polling means reside in the transaction processing level.

In another embodiment, the transaction processing level comprises multiple user concentrator, performance monitoring, and load balancing functions, and the database control level comprises data storage and retrieval, access control, and concurrency functions.

Ideally, the polling means of the transaction processing level comprises means for scanning error logs maintained by independent program self-monitoring tools.

In a further embodiment, event conditions are set by adjustable parameter values, the values being set according to the environment.

In another embodiment, the values are set to anticipate faults for timely prevention.

The invention will be more clearly understood when the following description of some embodiments thereof, given by way of example only with reference by the accompanying drawings in which:-
Fig. 1 is a schematic representation of a data processing support system of the invention, and
Fig. 2 is the flow diagram illustrating a support method of the invention.

Referring to the drawings, there is illustrated a data processing support system 1. The system 1 comprises a central server 10 which is an IBM RS/6000 system operating with a Unix operating system and one RISC processor. The central server 10 has 6 GB of disk capacity, and 256 MB of read/write memory. The central server 10 is connected in a network 11 having 10- base -2 cabling handling signals according to a TCP/IP protocol co-existing with an IPX/SPX protocol. Workstations 12 are connected to the network 11. These are conventional PCs at the hardware level. There are thirty-five workstations 12 and repeaters 13 are used to boost signals on the network 11.

The central server 10 is connected by routers 20 and a frame relay network 21 to a remote diagnostic system 25. The diagnostic system 25 comprises a network to which is connected a database controller 26 and a database 27. The system 25 also comprises a router 28 which links the system 25, and in turn the central server 10, with the Internet. The Internet is indicated by the numeral 31. The system 25 also comprises various workstations 29.

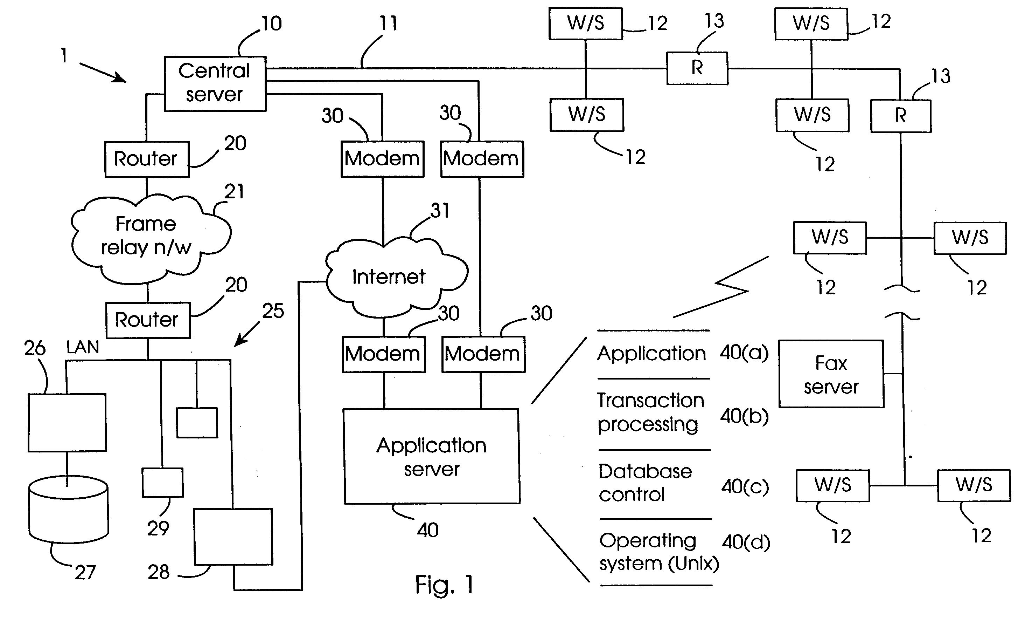

The central server 10 is connected to modems 30 which allow communication either directly or via the Internet 31 with a plurality of data processing remote systems or application servers 40. The application servers 40 are located remotely and in practice there is a large number of them, only one being shown for clarity. As illustrated in Fig. 1, each application server operates at four software levels, namely an application level 40 (a), a transaction processing level 40 (b), a database control level 40 (c), and an operating system level 40 (d).

The transaction processing level 40(b) provides multiple user concentrator functions. These allow multiple users access to one application server, and start new application servers when the response time is outside some parameters. This level also provides performance monitoring and load balancing functions. The database control level 40(c) on the other hand performs data storage/retrieval, access (security) control, and update concurrency functions.

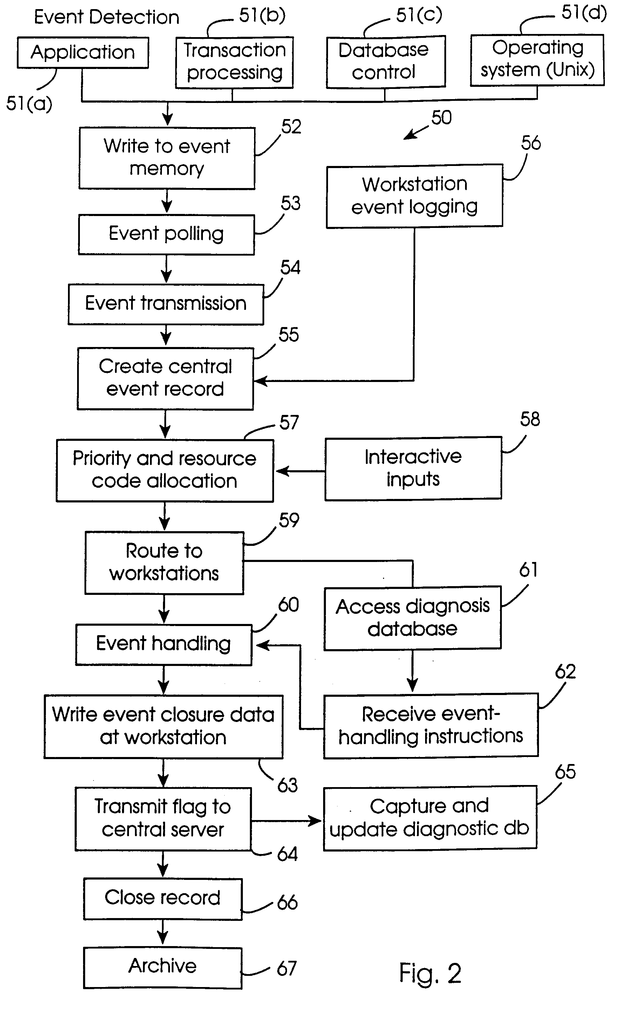

Referring now to Fig. 2, the manner in which the system operates in conjunction with the application servers 40 is now described. The method is indicated generally by the numeral 50 and comprises an initial step 51(a), 51(b), 51(c), or 51(d) of the application server 40 detecting an event at one of the levels 40(a), 40(b), 40(c), or 40(d) respectively. This is an important aspect of the method as it occurs transparently to the users of the application servers and helps to ensure integrity of the application. An example of an event is determining when a disk is almost full to capacity. This event is detected by the operating system level 40(d). The following is an example of a program to detect if any disk storage exceeds a pre-determined level.

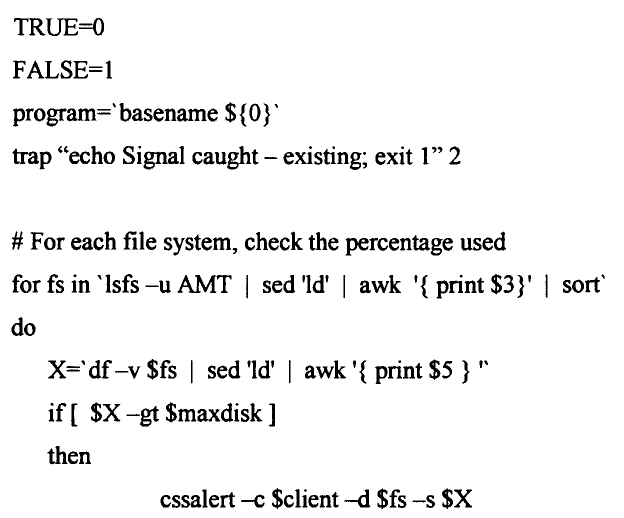

The database control level 40(c) may detect when database tables approach a maximum extent and there is therefore a need to allocate storage. The transaction processing level 40(b) may detect when the response time exceeds a certain level such as five seconds. The application level 40(a) may detect when the integrity of the security subsystem has been compromised.

An important aspect of operation of the application server is that each of the four levels independently detects event conditions. This allows very comprehensive event condition detection. Event conditions are detected under instructions in the most appropriate programming language for the specific level. The detection is parameter-driven whereby each event condition has a priority level specific to the particular level and site. This allows flexibility. For example printer spooler faults have different priority parameter values depending on the type of report being printed. The parameters also allow retrieval and output of simple fault messages if the event is unexpected and expert analysis of logs is required. Thus event conditions may involve known system values entering "event" ranges, or completely unexpected fault event conditions. The system values are set to allow prevention of faults arising. A simple example is the condition of a disk being 95% full - permitting action in time to prevent data corruption. A more complex example is recognition of patterns in use of memory which could lead to memory data loss by overwriting. Such detection is greatly facilitated by the fact that there is independent detection at each of the four levels.

Each of the four levels writes the event conditions to a mapped section of memory at the transaction processing level 40(b). An event condition retrieval program in this level periodically polls the mapped memory section to detect events.

In one embodiment, the polling period is two seconds. The step of writing to event memory is indicated by the numeral 52, and of polling by the step 53. In step 54, the transaction processing level 40(b) transmits event signals to the central server according to the event data. This is performed using electronic mail via the Internet 31, which is automatically logged. However, alternative methods could be used.

The transaction processor level 40(b) acts as a concentrator for messages from the other levels, avoiding the need for the other levels to transmit event signals. Also, the transaction processing level automatically scans error logs generated by self-monitoring tools of programs in the other levels.

When the central server 10 receives event signals, it automatically creates an event record in step 55. This is a record in a simple database which allows opening and closing of records in a short period or time. Step 55 involves the central server 10 performing the following steps:-
(i) assign next consecutive log number to the event,
(ii) date and time stamp the event,
(iii) assign a client (application sever) code to the event,
(iv) assign a client reference, if any,
(v) set the input mode to "fax", "email", "phone", or "auto",
(vi) assign status,
(vii) transfer textual data to the record, and
(viii) save the event record to the database.

The central server 10 maintains the live database, other parts of the system only accessing it for updating purposes.

Another method by which event signals are received is by an operator at a workstation 12 entering data which has been received in step 56. The workstation 12 automatically transmits the event signals to the central server 10 as indicated in Fig. 2. These differ from remotely-generated event signals in that they take the form of natural-language messages, such as "The payroll group 4 deductions have not completed". On the other hand, an event signal from an application server may take the form "23/03/97 12:35:45 Fatal Error in crawlout - core dumped".

In step 57, the central server determines how to allocate the event record according to its priority and to the operator resources which are required. Each of the levels in the application server 40 is programmed to automatically insert a priority code according to the nature of the event condition. In addition, the central server 10 accesses a lookup table to determine a resource code and it is a combination of the priority and resource codes which is used for routing of the event record to the relevant workstation 12. The resource codes are interpreted according to a system resource map which allocates workstations to resources according to the level of expertise. This map is maintained automatically in a dynamic manner as personnel log on to workstations and register with the central server 10.

Some interactive inputs may be required for event record routing, as indicated by the step 58. If the event is handled by telephone voice communication with an operator at a workstation, the event signals are transmitted to the central server 10 to create an event record for audit/contract performance purposes.

The event record is routed in step 59 and the event is handled in step 60. Handling of the event may be assisted by the workstation 12 accessing the diagnostic database 27 via the controller 26 of the remote diagnostic system 25. Interrogation of this database is based on catchwords which are used to retrieve solutions to certain problems. By this method, event-handling instructions may be received in step 62 to assist in handling of the event in step 60. The event is handled in an automatic manner to correct faults which arise by automatic transmission of signals from the relevant workstation to the requested application server. This communication can be direct or via the central server 10, depending on the available communication resources. The transmitted signals may include a software patch for insertion by an operator at the application server. An example is:-
... Add the following lines to tpnames.ora: ...
... %TIMING 10,10,20,90,1800,600,20,0,0 ... %CONFIG
   500,500,4,0,0,40,10,7992+NET ...

In step 63, the operator inputs the event closure data to the event record, this data indicating the solution to the problem which arose. Once this data is written to the event record, the workstation 12 transmits a flag to the central server 10 to indicate that the event has been handled.

In step 65, the central server 10 captures the closure data and uses it to automatically update the diagnostic database 27 via the routers 20 and the frame relay network 21. This operation involves retrieving all of the problem and solution textual data from a particular set of fields in the event record and transferring them together with a closure code directly to the diagnostic database 27. As the data is received at the database 27, it is parsed so that the diagnostic database indexes are updated automatically. This diagnostic updating has been found to be particularly useful for capturing problem/solution information for events which originated in step 56. A relatively unskilled operator can provide effective assistance in a short period of time.

In step 66 the central server 10 closes the event record and it then archives the record in step 67. Statistical and management reports are generated at subsequent stages in order to provide useful data retrieved from the archived event record.

It will be appreciated that the invention provides comprehensive support for a broad range of requesting remote systems in a flexible manner. This flexibility is not at the expense of response time because of operation of the central server 10 creating an event record and automatically routing it to a particular workstation for optimum efficiency. The manner in which a live database is maintained allows comprehensive event control and monitoring in a dynamic, real time manner. Efficiency is also greatly assisted by the manner in which the central server 10 automatically updates the diagnostic database to build knowledge in the system dynamically.

The invention is not limited to the embodiments described but may be varied in construction and detail.

## Claims

1. A support system for performing centralised support for data processing remote systems, the support system comprising an interface for communication with the remote systems and a processing means for processing received support requests, characterised in that,
the processing means comprises a central server (10) connected to a plurality of workstations (12);
the central server comprises means for automatically creating (55) an event record with event condition data upon receipt of an event signal from a remote system (40);
the central server comprises means for routing (59) each event record to a workstation (12); and
each workstation comprises means for processing (60) events according to received event records.

2. A support system as claimed in claim 1, characterised in that the central server (10) comprises means for maintaining a live database of event records, and for updating the database.

3. A support system as claimed in claim 2, wherein each workstation (12) comprises means for directing closure of an event record after it has processed the associated event.

4. A support system as claimed in any of claims 1 to 3, wherein each workstation comprises means for receiving (56) locally-inputted event condition data, and for transmitting corresponding event signals to the central server.

5. A support system as claimed in claim 4, wherein each workstation comprises means for indicating in event signals that an event has been dealt with, and the central server comprises means for writing an event record to the database for recording purposes.

6. A support system as claimed in any preceding claim, wherein the central server comprises means for automatically routing (59) event records to the workstations (12) according to priority and resource codes.

7. A support system as claimed in claim 6, wherein the central server (10) comprises means for retrieving the resource code from a look-up table addressed with event condition data.

8. A support system as claimed in claim 7, wherein the workstations comprise means for dynamically updating the look-up table.

9. A support system as claimed in any of claims 6 to 8, wherein the central server comprises means for determining the priority code according to priority data embedded in the event signals.

10. A support system as claimed in any preceding claim, wherein the workstations (12) comprise means for accessing a diagnostic database (26) for retrieval of diagnostic data.

11. A support system as claimed in claim 10, wherein the central server (10) comprises means for automatically updating the diagnostic database upon closure of an event record by transmitting textual problem and solution data, and the diagnostic database comprises means for automatically parsing said data.

12. A support system as claimed in any of claims 2 to 11, wherein the central server comprises means for automatically archiving closed records, and for generating management reports from the archived records.

13. A data processing system (40) comprising means for processing data for detecting event conditions and for transmitting event signals to a support system, characterised in that, said processing means further comprises:-
means for automatically detecting (51(a) - 51(d)) event conditions in the system and for automatically writing event data to a mapped section of memory; and
means for periodically polling (53) said mapped section of memory and for automatically transmitting (54) event signals to the support system.

14. A data processing system as claimed in claim 13, wherein the system comprises a plurality of software levels, each level comprising means for independently detecting event conditions.

15. A data processing system as claimed in claim 14, wherein the system comprises application (40(a)), transaction processing (40(b)), database control (40(c)), and operating system (40(b)) levels in descending order.

16. A data processing system as claimed in claim 15, wherein the mapped section of memory and the polling means reside in the transaction processing level.

17. A data processing system as claimed in claim 16, wherein the transaction processing level comprises multiple user concentrator, performance monitoring, and load balancing functions, and the database control level comprises data storage and retrieval, access control, and concurrency functions.

18. A data processing system as claimed in claim 16 or 17, wherein the polling means of the transaction processing level (40(b)) comprises means for scanning error logs maintained by independent program self-monitoring tools.

19. A data processing system as claimed in any of claims 13 to 18, wherein event conditions are set by adjustable parameter values, the values being set according to the environment.

20. A data processing system as claimed in claim 19, wherein the values are set to anticipate faults for timely prevention.
